# EUROPEAN PATENT APPLICATION

(11) **EP 4 827 040 A1**
(43) Date of publication of application: **21.10.2026**
(21) Application number: 25171491.1
(22) Date of filing: 18.04.2025
(51) Int. Cl.: H04L 9/08

(54) **IMPROVED RECEIVER FOR DISCRETE-VARIABLE QKD AND QKD SYSTEM COMPRISING THE SAME**

(71) Applicant: ID Quantique S.A., 1227 Genève (CH)
(72) Inventor: HUTTNER, Bruno, 1022 Chavannes-près-Renens (CH); BOARON, Alberto, 1205 Genève (CH)
(74) Representative: KATZAROV S.A.

(57) **Abstract**

The present invention relates to a quantum key distribution receiver for a discrete variable QKD protocol comprising an optical circuit adapted to receive a signal from an emitter, split it into several states and temporally multiplex the different states at fixed time-differences, a unique single-photon detector adapted to detect said states in specific time-bins at said fixed time-differences, wherein said receiver is adapted to control said unique single-photon detector in gated mode so as to effectively activate the detector to create detection gates at said specific time-bins, the choice of the time-bins corresponding to the choice of the measurement basis of the qubits, and activate the detector to create extra detection gates at additional security time-bins different from said specific time-bins.

## Description

### Technical Field

The present invention relates to Quantum Key Distribution (QKD) technology and more particularly to a receiver presenting a simplified structure and a QKD system comprising said receiver capable to function with different protocols.

### Background of the invention

Quantum cryptography or quantum key distribution, in the following also referred to as QKD, is a method allowing the distribution of a secret key between two distant parties, the emitter and the receiver, with provable security. QKD relies on quantum physics principles and encoding information in quantum states, or qubits, as opposed to classical communication's use of bits. Usually, photons are used for these quantum states. QKD exploits certain properties of these quantum states to ensure its security.

More particularly, the security of this method comes from the fact that the measurement of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some kind of symmetric encryption using the keys exchanged by quantum key distribution. Specific quantum key distribution systems are described for instance in US 5,307,410, and in the article by Gisin et al. entitled "Quantum cryptography" Rev. Mod. Phys. 74, 145 - Published 8 March 2002.

Nowadays, most Discrete-Variable QKD systems mentioned in the literature, which rely on single-photon detection, have several detectors, in addition to several other optical components. This is due to the fact that the receiver, Bob, measures the value of the qubit sent by the transmitter, Alice, by detecting it as a click in one out of two detectors. In addition, he has to choose a measurement basis, either actively with an optical switch and one set of detectors, or passively with an optical coupler and an extra set of detectors.

This leads to QKD receivers with additional detection modules which complexifies the receiver structure and its manufacture. Moreover, these modules are expensive, which adds cost and complexity to the entire QKD systems.

Therefore, there is a need to reduce the number of active optical components in QKD receivers without impacting the security of the system.

However, with the current techniques, it is not possible to reduce the number of optical elements and provide a simplified receiver without exposing the system to eavesdropper attacks, hence reducing the security of the QKD system.

It should be noted that some published articles already suggest using a unique single-photon detector. For example, the QKD system described in "Experimental demonstration of polarization-based decoy-state BB84 quantum key distribution utilizing a single laser and single detector", a preprint available on OpticaOpen, uses a unique single-photon detector. However, all of these implementations are subject to strong-pulse attacks or to pulse-timing attacks, which will be presented in the following. This makes these implementations insecure. Security is only recovered by using the ideas in the present invention.

In this regard, a primary object of the invention is to solve the above-mentioned problems and more particularly to provide a system using a simple structured QKD receiver that is easy to manufacture and to implement without reducing the security of the QKD system which functions with different protocols including BB84.

### Summary of the invention

The present invention executes the general approach that in order to extend QKD applications to end-users, a simple and inexpensive QKD is needed.

The most expensive components in a QKD receiver are the single-photon detectors and the active optical components, which enable Bob to select the measurement basis. The present invention therefore solves the above-mentioned problems by providing a QKD receiver with a unique single-photon detector and no active optical component, thus providing a simple low-cost solution for the QKD receiver.

The general principle of the invention is to temporally multiplex the different signals and use a unique single-photon detector; to select the measurement basis by using the detector in gated mode, which effectively opens the detector in selected time bins; and to add one or several security time-bins, which reveal possible eavesdropper's attacks. In this way, the system is not exposed to attacks and its quantum security is maintained.

The temporal multiplexing of the signals permits to replace several detectors in parallel, where each signal should be registered by a different detector, by a single detector, where signals arrive at different times. It is the first step to realize a low cost QKD system.

However, as will be demonstrated in the following, the temporal multiplexing opens new attack possibilities, such as strong pulse attacks and pulse-timing attacks. In order to recover the security, Bob needs to add an active choice of the measurement basis. Since active optical components are expensive, the invention uses an electronic choice, by using the detector in gated mode and choosing the gates according to the measurement basis. The use of the detector in gated mode prevents the so-called strong-pulse attack. In addition, adding extra gates, named security gates, permits to avoid pulse-timing attacks.

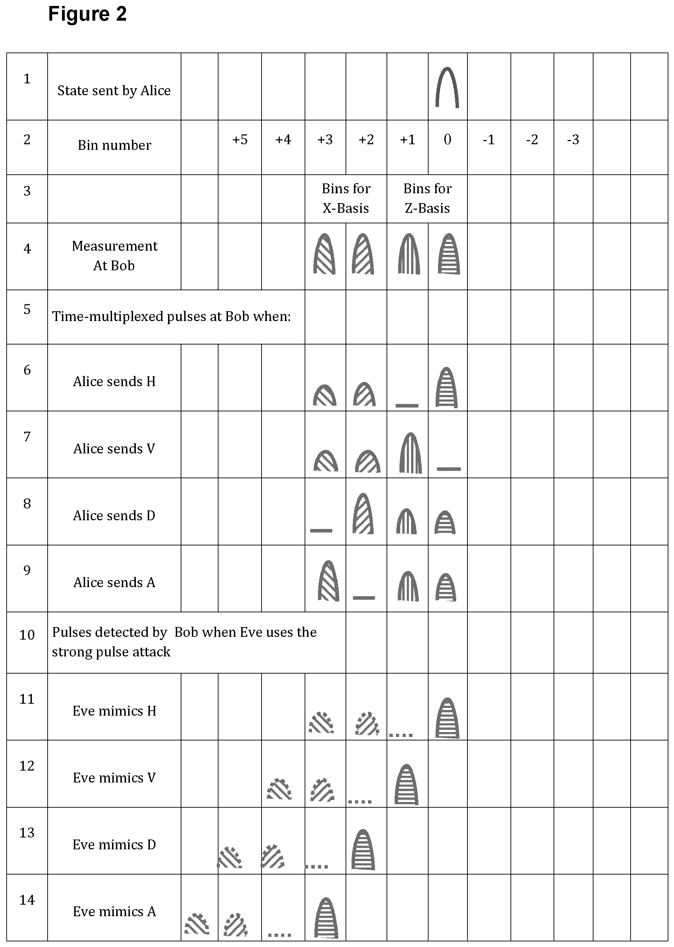

The strong-pulse attack can be applied by an eavesdropper, commonly denoted as Eve, when the single-photon detector at Bob is used in free-running mode. This means that the detector is open and can detect photons at any time. Due to the dead-time of the detector, the detector can only click once upon receiving a photon but would not recover before the next series of pulses. In other words, due to the dead-time, the detector can click only in one of the time-multiplexed bins. In the regular operation of the device, the optical pulses contain less than one photon, which means that the detector may click in any one of the time-bins. In the case of a strong pulse attack, the strong pulse is split into several pulses, which arrive at different times. Since these pulses contain a large number of photons, the first one will always make the detector click. The detector then needs time to reset (the so-called dead-time) and will not register any photon until a new set of pulses. Eve could use this dead-time to send fake pulses and impose the result on Bob. This is described in Figure 2 and explained later for the BB84 protocol with polarized photons. Since Eve knows the bits received by Bob, the setup is not secure. In order to achieve a secure system, Bob should therefore switch to detection in gated mode.

In the gated mode, the detector can only click at the time when there is a voltage gate on the detector. In essence, by choosing the timing of the voltage gate, Bob can choose when the detector is active and when it is not. This allows Bob to choose in which basis he will measure. While working in the gated mode allows Alice and Bob to thwart the strong-pulse attack described above, it is not enough to prevent the pulse-timing attack.

In the pulse-timing attack, Eve, sends optical pulses at any time she chooses, but these pulses are not necessarily strong. Her goal is to be able either to choose the result, which will be obtained by Bob, or to make sure that the pulses are not detected. In this case, the only signature, which is left by Eve, is extra loss in the transmission. However, in principle, Eve could replace a lossy quantum channel by a perfect one, with no loss. Assuming that the loss induced by her eavesdropping strategy is less than the channel loss, this would not be discovered by Alice and Bob. Therefore, in all existing QKD protocols, if a possible eavesdropping strategy induces only extra loss, the protocol is not considered secure. This attack can be prevented by adding extra gates, whereby Bob opens his detector in different time- bins, named security time-bins. Detection of photons in these security time-bins means that Eve was attempting to perform the pulse-timing attack. This will be exemplified for the BB84 protocol with polarized photons in the following. The combination of the gated mode and the extra security time bins allows Alice and Bob to recover the security of QKD with a single detector.

More particularly, a first aspect of the invention is a quantum key distribution receiver for a discrete variable QKD protocol comprising an optical circuit adapted to receive a signal from an emitter, split it into several states and temporally multiplex the different states at fixed time-differences, a unique single-photon detector adapted to detect said states in specific time-bins at said fixed time-differences, wherein said receiver is adapted to control said unique single-photon detector in gated mode so as to effectively activate the detector to create detection gates at said specific time-bins, the choice of the time-bins corresponding to the choice of the measurement basis of the qubits, and activate the detector to create extra detection gates at additional security time-bins different from said specific time-bins.

Advantageously, the optical circuit which multiplexes the different states onto the single detector includes a multicore fiber.

Preferably, the additional security time-bins are designed to counter pulse-timing attacks.

According to a preferred embodiment of the present invention, the additional security time-bins comprise two or more security time-bins before or/and after from said specific time-bins.

Advantageously, the protocol is a polarization-based BB84 protocol and the optical circuit comprises a Polarization Controller adapted to align the four polarization states of BB84: Horizontal (H), Vertical (V), Diagonal (D) at 45°, and Antidiagonal (A) at -45°, received.

Preferably, the quantum key distribution receiver comprises a Beam Splitter (BS) receiving the aligned states and splitting the aligned states into a first signal in the Z-basis, i.e. Horizontal (H) and Vertical (V) states and into a second signal in the X-basis, i.e. Diagonal (D) at 45°, and Antidiagonal (A) at -45° states.

According to a preferred embodiment of the present invention, the quantum key distribution receiver further comprises a top Polarization Beam Splitter (PBS) separating the Horizontal (H) and Vertical (V) states and a bottom Polarization Beam Splitter separates the Diagonal (D) at 45°, and Antidiagonal (A) at -45° states, and respective Delay Lines to multiplex the four different states in the time-domain.

A second aspect of the invention is a quantum key distribution system comprising the quantum key distribution receiver of the first aspect and an emitter connected through a quantum channel.

A third aspect of the invention is quantum key distribution method implemented in the quantum key distribution system of the second aspect of the invention comprising a step of judgment wherein when there is a detection in one of the additional security time-bins, an attack is detected.

### Brief description of the drawings

Further particular advantages and features of the invention will become more apparent from the following non-limitative description of at least one embodiment of the invention which will refer to the accompanying drawings, wherein the same reference numerals indicate the same feature. In particular,
- Figure 1 schematically shows the passive receiver with a unique single-photon detector for the polarization-based BB84 protocol,
- Figure 2 shows the BB84 protocol with free-running detectors where we can see that this system is sensitive to the strong pulse attack and is not secure, and
- Figure 3 shows the BB84 protocol with the detector in gated mode and the extra security time bins according to the present invention where we can see that pulse-timing attacks will be discovered by Alice and Bob by checking counts in the security time bins.

### Detailed Description

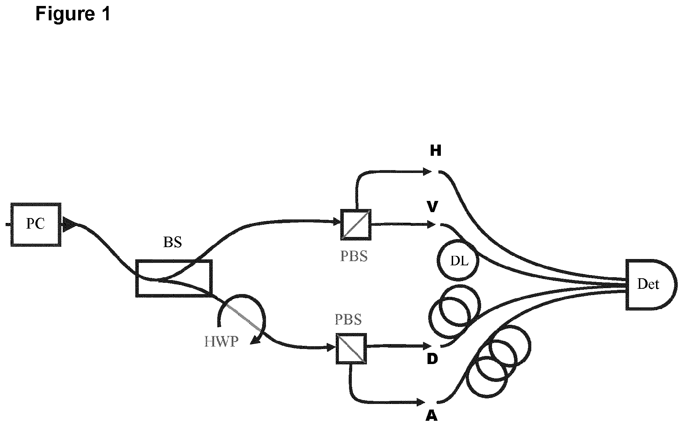

The invention will be described, for better understanding, with reference to a specific embodiment illustrated by Figures 1 to 3. It will however be understood that the invention is not limited to the embodiments herein described but is rather defined by the claims and encompasses all embodiments which are within the scope of the claims.

The present invention relates to a Quantum Key Distribution receiver presenting a simplified structure and a QKD system comprising said receiver adapted to run any discrete-variable QKD protocol. The general principle of the invention is presented by specifically describing the polarisation-based BB84 protocol. Similar principles can be used for other discrete-variable protocols such as for a 3-state BB84 with time-bins and phase.

More particularly, as mentioned above, the present invention provides a way to implement a receiver side of a polarization-based BB84 protocol with a unique single-photon detector. Thanks to the invention, the receiver is entirely passive and no high-speed optical component is needed. The receiver of the present invention therefore helps in terms of cost, complexity and reliability.

We will now describe the setup of the transmitter of the present invention. For each pulse, Alice chooses randomly one of the four polarization states of BB84: Horizontal (H), Vertical (V), Diagonal (D) at 45°, and Antidiagonal (A) at -45°. They are grouped into two polarization bases: the Z-basis, which corresponds to the H and V polarizations, and the X-basis, which corresponds to the D and A polarizations. As a side note, the customary names Z- and X- bases refer to positions on the Bloch sphere for two-level systems. Alice sends these states to the receiver, Bob.

The passive receiver with a unique single-photon detector for the polarization-based BB84 protocol is shown in Figure 1 where we can see the detection scheme. A Polarization Controller (PC), aligns the polarization received, to ensure that the polarization states received by Bob are aligned to the states sent by Alice: namely the four polarization states of BB84: Horizontal (H), Vertical (V), Diagonal (D) at 45°, and Antidiagonal (A) at -45°.Then, the input state is equally split by the Beam Splitter (BS), which performs the passive choice of measurement basis: either Z-basis, i.e. HV or X-basis, i.e. DA. The top Polarization Beam Splitter (PBS) separates the states in the Z-basis into the H and the V polarization states. In the lower path of the BS, a Half-Wave Plate (HWP) rotates the polarization by 45° such that the bottom PBS separates the states in the X-basis into the D and A polarization states. The circles represent Delay Lines (DL), which are used to multiplex the four different states in the time-domain. In this setup, the polarization state H arrives first at the detector (first time bin), followed by the polarization state V (second time bin), then the D state (third time bin) and finally the A state (forth time bin).

Each of the four possible states therefore arrives at fixed time-differences. The four fibers are brought together on the unique single-photon Detector (Det). This can be achieved with a 4X1 optical coupler, with the disadvantage that it generates losses at the detector. A preferred solution is to use a multicore fiber to limit the loss. The four fibers connected to the different paths are spliced to the multicore fiber with four cores. Since the detector size is larger than the size of the multicore fiber, it can be placed in front of the multicore fiber, which will couple the light into the detector with limited loss. It has to be noted that the present invention does not discuss the transmitter side, which can be implemented in many ways.

We will now first describe Figure 2 which explain free-running detection, in order to show why the scheme is not secure.

The state sent by Alice arrives in bin 0 at Bob. The optical pulse is split by the detection apparatus into various components, depending on the polarization. The different polarizations are denoted by the lines inside the pulses, horizonal for horizontal polarization, vertical for vertical polarization, diagonal at 45° for diagonal polarization and diagonal at -45° for antidiagonal polarization. For example, if Alice sends a pulse in the Z-basis with horizontal polarization in bin 0, shown in line 6, the four pulses arriving in the detector are: H in bin 0; empty V in bin 1; and two smaller pulses (D and A), from the second PBS in bin 2 and 3. Since the pulses contain less than one photon on average, the detector can click in any of the 0, 2 and 3 time-bins. Bob may get a count in time-bin 0, corresponding to H**,** but never in time-bin 1, corresponding to V. However, when the detector does not click in time-bin 0, he may get a count randomly in time-bin 2 or time-bin 3, corresponding to either D or A. Since this corresponds to different bases, this count will be discarded by Alice and Bob during the reconciliation process of QKD described below. The same analysis applies to all four different states, as shown in lines 7 to 9. After reception Bob tells Alice in which basis he received the pulse, which is whether he obtained a click in the Z-basis (time-bins 0 or 1) or in the X-basis (time-bins 2 and 3). But he does not tell the bin itself. This is the standard reconciliation process of the BB84 protocol, which allows Alice and Bob to have the same data in the absence of an eavesdropper. When Bob receives the photon in the same basis as sent by Alice, they should make no mistake, and they keep the data. When the bases are different, they have a random result, with an error rate of 50%, and they discard it. When Eve tries to eavesdrop on the transaction, she will introduce errors, which will be discovered by Alice and Bob during the error correction process. The standard security proofs of the BB84 protocol therefore apply.

However, the use of a unique single-photon detector in time-multiplexed configuration introduces new attack opportunities, such as the strong-pulse attack. This attack is described in rows 10 to 14 of Figure 2. After eavesdropping a pulse at a given time, instead of sending pulses with different polarization at the same time, Eve sends pulses with horizontal polarization, but at different times. For example, she sends a pulse in time-bin +2 to mimic a diagonal pulse. These pulses will be split into four as described above, but since they contain many photons, the first one will always be detected by Bob, while the others will never be detected, due to the dead-time of the detector. This is why they are only drawn as dotted lines in Figure 2. By choosing the timing, Eve can impose the detection on Bob. She can now perform an intercept and resend attack. She measures the pulses sent by Alice in the basis she chooses, and resends a strong pulse, which mimics the state she has measured. In this way, she forces Bob to choose the same basis as she did. When Alice and Bob perform the reconciliation process, they discard all the pulses, where the bases were different, and keep all the pulses, where the bases were the same. When Eve (and therefore also Bob) chose the same basis, Bob's result matches the state sent by Alice. When Eve (and Bob) chose different bases, the results are discarded. Therefore, Eve has complete knowledge of the remaining string, without introducing errors. This demonstrates that using a unique single-photon detector in the free-running mode with time-multiplexed configuration is not secure.

Therefore, in order to recover a secure scheme, there is a need for Bob to have an active detection scheme, where he chooses the detection basis. This can be achieved with an active optical switch, but this adds complexity and cost.

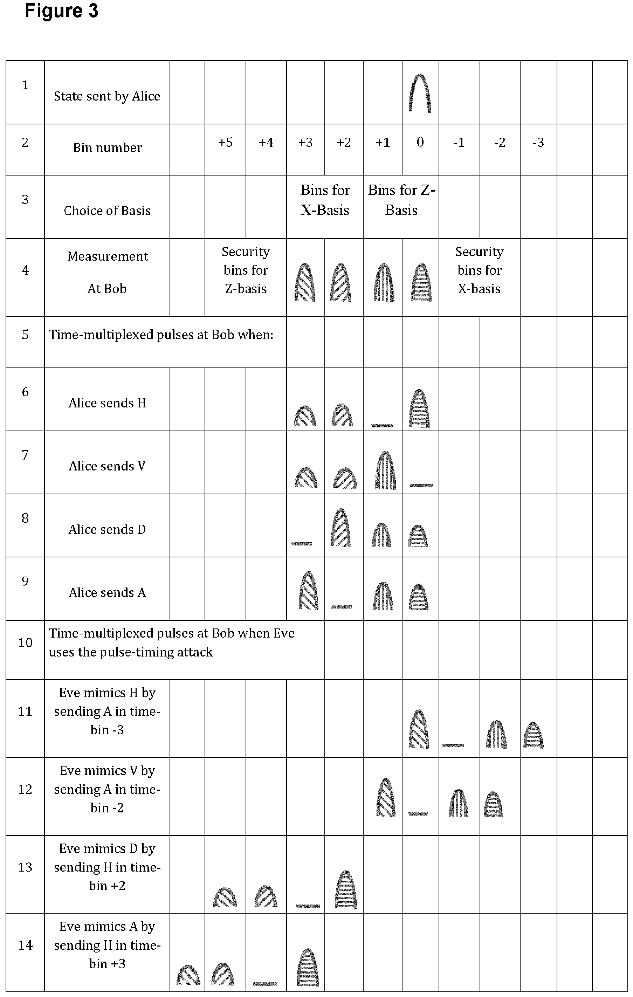

The present invention shown in Figure 3 selects an electronic choice, by using the detector in gated mode. In the gated mode, the detector can only click at the time when there is a voltage gate on the detector. In essence, Bob can then choose when the detector is active and when it is not. This allows Bob to choose in which basis he will measure, as shown in rows 1 to 4 of Figure 3. Note that, in the strong pulse attack, if the pulse is sufficiently strong, the detector may register a count, even when it is not gated. However, Bob will then register counts when he expected none, which will be enough to discover this strong-pulse attack.

Unfortunately, the choice of measurement basis by Bob alone is not enough to obtain a secure scheme, due to the pulse-timing attack. This is described in lines 11 to 14 of Figure 3. For example, if Eve wishes to mimic a H pulse, as in line 11, she can send an A pulse to arrive in time bin -3. After the detection apparatus, this pulse arrives at the detector as a series of four pulses. When Bob measures in the Z-basis, he may get a count in bin 0, corresponding to H, but in no other bin. If he measures in the X-basis, he will get no count. Therefore, Eve will not generate any error. Note that there are other options for Eve, for example a D pulse in time-bin -2, which leads to similar results. The same applies to the other three possible pulses, with examples described in lines 12 to 14. Therefore, this scheme is not secure. In all of these cases, when Eve sends a pulse in the right basis, she imposes the result of the measurement to Bob. When she sends a pulse in the wrong basis, the pulse will never be counted. Overall, Eve will never generate an error.

To prevent the pulse-timing attack, there is a need to add extra detection bins, the security time-bins, as described below. These security bins ensure that Eve will be detected, when Bob does not choose the same basis as her. The gated mode with extra security time bins is illustrated in Figure 3. According to this particular embodiment, when Bob wishes to measure in the Z-basis, he opens the detector in the 0 and +1 time bins. In addition, he adds two security bins in the +4 and +5 time bins. When Bob wishes to measure in the X-basis, he opens the detector in the +2 and +3 time bins. In addition, he adds two security bins in the -1 and -2 time bins (i.e. before the regular gates).

Following the example of line 11, we see that when Bob measures in the X-basis, with the added security gates, he may get a count in the security bin -2. With different options for Eve, he may also get a count in the security time bin -1. Detection in the security time bins are a sign that Eve was trying to use the pulse-timing attack. The same analysis applies to the other polarizations, in lines 12 to 14. Eve cannot use the pulse-timing attack without having a non-zero probability of generating counts in the security gates. Security of the scheme is recovered by analyzing the counts in the security gates and taking them into consideration in the key security analysis.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This includes for example particularly the case regarding the different protocols and apparatuses, which can be used.

## Claims

1. Quantum Key distribution receiver for a discrete variable QKD protocol comprising
an optical circuit adapted to receive a signal from an emitter, split it into several states and temporally multiplex the different states at fixed time-differences,
a unique single-photon detector adapted to detect said states in specific time-bins at said fixed time-differences,
wherein said receiver is adapted to control said unique single-photon detector in gated mode so as to effectively
- activate the detector to create detection gates at said specific time-bins, the choice of the time-bins corresponding to the choice of the measurement basis of the qubits, and
- activate the detector to create extra detection gates at additional security time-bins different from said specific time-bins.

2. Quantum key distribution receiver according to claim 1, **characterized in that** the optical circuit which multiplexes the different states onto the single detector includes a multicore fiber.

3. Quantum key distribution receiver according to claim 1 or 2, **characterized in that** the additional security time-bins are designed to counter pulse-timing attacks.

4. Quantum key distribution receiver according to any one of claims 1 to 3, **characterized in that** said additional security time-bins comprise two or more security time-bins before or/and after from said specific time-bins.

5. Quantum key distribution receiver according to any one of claims 1 to 4, **characterized in that** the protocol is a polarization-based BB84 protocol and the optical circuit comprises a Polarization Controller adapted to align the four polarization states of BB84: Horizontal (H), Vertical (V), Diagonal (D) at 45°, and Antidiagonal (A) at -45°, received.

6. Quantum key distribution receiver according to any one of claims 1 to 5, **characterized in that** it comprises a Beam Splitter (BS) receiving the aligned states and splitting the aligned states into a first signal in the Z-basis, i.e. Horizontal (H) and Vertical (V) states and into a second signal in the X-basis, i.e. Diagonal (D) at 45°, and Antidiagonal (A) at -45° states.

7. Quantum key distribution receiver according to any one of claims 1 to 6, **characterized in that** it further comprises a top Polarization Beam Splitter (PBS) separating the Horizontal (H) and Vertical (V) states and a bottom Polarization Beam Splitter separates the Diagonal (D) at 45°, and Antidiagonal (A) at -45° states, and respective Delay Lines to multiplex the four different states in the time-domain.

8. Quantum key distribution system comprising the quantum key distribution receiver of any one of claims 1-7 and an emitter connected through a quantum channel.

9. Quantum key distribution method implemented in the quantum key distribution system of claim 7 comprising a step of judgment wherein when there is a detection in one of the additional security time-bins, an attack is detected.
